# FASCICULE DE BREVET EUROPEEN

(11) **EP 3 650 593 B1**
(45) Date de publication et mention de la délivrance du brevet: **19.05.2021**
(21) Numéro de dépôt: 19207458.1
(22) Date de dépôt: 06.11.2019
(51) Int. Cl.: D03D 27/06

(54) **TAPIS AVEC UN MICRORELIEF TISSÉ ET MÉTHODE**
MATTE MIT EINEM GEWEBTEN MIKRORELIEF, UND METHODE
CARPET WITH A WOVEN MICRORELIEF AND METHOD

(30) Priorité: 06.11.2018 BE 201805772
(43) Date de publication de la demande: 13.05.2020
(73) Titulaire: De Poortere Deco SA, 7700 Mouscron (BE)
(72) Inventeur: Schollier, Bert, 7700 Mouscron (BE)
(74) Mandataire: Brantsandpatents bvba

(56) Documents cités:
- EP-A1- 1 801 272
- BE-A- 823 976

## Description

### DOMAINE TECHNIQUE

La présente invention se rapporte à un tapis avec un relief surface tissé et à une méthode pour la fabrication dudit tapis. En particulier, l'invention se rapporte à un tapis comprenant des fils de tension et de liage qui sont tendus de telle manière que les fils de trame et/ou de chaîne de poil se situent explicitement à la surface du tapis.

### CONTEXTE

La prévision d'aspects visuels et techniques spécifiques de tapis est un défi important afin de pouvoir offrir une diversification de produit et donc de pouvoir offrir un produit unique au consommateur. En plus, certains aspects techniques de la surface du tapis ont pour but d'assister le consommateur de manière technique.

EP 2 851 459 décrit une méthode pour la fabrication d'un tapis avec un look usé; comprenant les étapes suivantes: arranger les fils de chaîne dans un plan les uns à côté des autres sans chevauchement; et entrelacer les fils de trame par les fils de chaîne de sorte que les fils de trame soient positionnés sur les fils de chaîne selon des rangées successives et de manière essentiellement perpendiculaire; les fils de trame sont insérés de manière répétitive dans la même rangée et selon un motif d'insertion prédéfini. Ce modèle d'insertion est interrompu au moins une fois afin de laisser visible au moins un segment d'un moins un fil de chaîne.

EP 2 851 460 décrit une méthode pour la fabrication d'un tapis avec un look patchwork, comprenant les étapes suivantes: arranger les fils de chaîne dans un plan de manière juxtaposée sans chevauchement; insérer et interligner les fils de trame par lesdits fils de chaîne de sorte que lesdits fils de trame soient positionnés selon des rangées successives et de manière essentiellement perpendiculaire sur lesdits fils de chaîne; les fils de trame sont insérés de manière répétitive dans la même rangée et selon un motif d'insertion prédéfini. Le modèle d'insertion est interrompu au moins une fois pour créer une ligne de coutures sur un des plans du tapis.

EP 3 199 678 se rapporte à un tapis avec des fils brillants, comprenant un tissu avec une série de fils de trame, insérés de manière essentiellement perpendiculaire et tissés avec un série de fils de chaîne principalement parallèles, dans lequel au moins 0,1% de ces fils de trame sont brillants avec une brillance d'au moins 70 unités de brillance, mesurée sous un angle d'incidence de 45° selon ASTM D2457, 10% à 40% des fils de trame des polymères brillants, et que 60% à 90% desdits fils de trame comprennent un ou plusieurs fibres naturels.

US 3,850,783 décrit un tapis tufté à double poil avec un matériel de dos avec une chaîne préimprimé avec un motif de couleurs répétitif formé selon un motif de texture de pôles tufté plus haut et plus bas avec le dernier motif corrélé et combiné avec la teinte de répétition avec motif de couleurs, et dans lequel tapis, le pile de faisceaux peut être tissé ou tufté, et dans lequel les motifs, ou un des deux motifs, peut être répété transversalement, longitudinalement ou les deux.

US 4,045,848 montre une technologie dans laquelle le fil de filament continu synthétique est tissé avec un remplissage protecteur et se forme donc en préfabriqué, des parties sélectionnées du préfabriqué sont teintées, le préfabriqué est rétréci optionnellement, soit avant soit après la teinture, le préfabriqué est plongé dans une solution diluée qui, lorsque concentrée, détruit le remplissage protecteur, et le préfabriqué est ensuite soumis à une opération d'échauffement et de séchage, la décoction d'eau et la solution concentrée, puis le remplissage protecteur substantiellement complètement détruit et les fils de chaîne libérés comme une chaîne libre de fils colorés intermittents.

EP 1 801 272 décrit un tapis tissé.

Aucun des susdits documents ne montre cependant comment un microrelief affiné puisse être inséré dans un tapis. La présente invention essaie d'offrir un tapis avec un microrelief précis à la surface du tapis.

### RESUME

A cet effet, l'invention offre, dans un premier aspect, un tapis avec un relief de surface tissé, comprenant au moins une série de chaînes de tension (1), une série de chaînes de liage (2), dans lequel lesdites chaînes (1, 2) sont tissées avec une série de fils de trame (3), dans lequel ledit tapis comprend une face d'aspect et une face de dos, et dans lequel une couche de dos (6) est attachée à ladite face de dos; et dans lequel le rapport de la longueur desdites chaînes de liage (2) par rapport à la longueur desdites chaînes de tension (1) est supérieur à 1.50. En choisissant un rapport de la longueur desdites chaînes de liage (2) par rapport à la longueur desdites chaînes de tension (1) qui est assez large, les fils de trames qui sont intégrés dans le tissu, sont poussés plus explicitement vers la surface du tapis.

Dans un deuxième aspect, l'invention offre une méthode pour la fabrication d'un tapis avec un relief de surface tissé, plus particulièrement un tapis selon le premier aspect de l'invention, comprenant les étapes suivantes:
- la prévision d'au moins une série de chaînes de tension (1), une série de chaînes de liage (2) dans la direction de chaîne d'un plan de tissage;
- entrelacer une série de fils de trame (3) avec lesdites chaînes (1, 2), ainsi obtenant un tapis avec une face d'aspect et une face de dos;
- l'attachement d'une couche de dos (6) à ladite face de dos;
dans lequel la pré-tension desdites chaînes de tension (1) et de liage (2) est réglée de telle façon que le rapport de la longueur desdites chaînes de liage (2) par rapport à la longueur desdites chaînes de tension (1) dans le tapis fabriqué est supérieur à 1.50.

### DESCRIPTION DES FIGURES

Les caractéristiques explicites, les avantages et les objectifs de la présente invention deviendront plus clairs pour le spécialiste dans le domaine technique de l'invention après lecture de la description suivante du mode de réalisation de l'invention et des figures annexées. Les figures servent à expliquer plus en détail l'invention et sont uniquement illustratives, sans limiter l'étendue de l'invention.

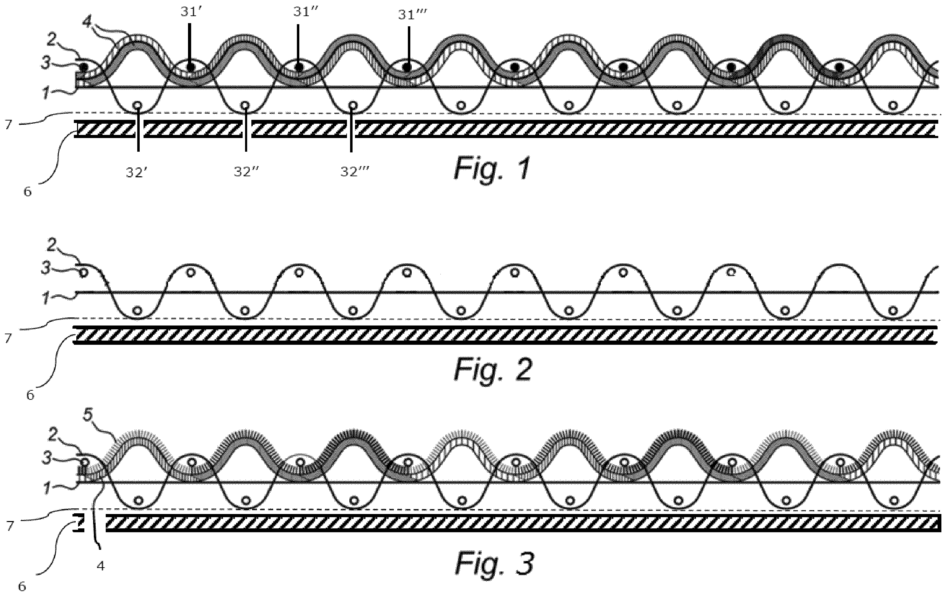

Les figures 1 jusqu'à 3 montrent une illustration détaillée simplifiée d'un tapis selon la présente invention.
La figure 1 montre de manière schématique une illustration détaillée d'un tapis avec indication du fil de chaîne 1, 2, du fil de trame 3 et des fils de chaîne de poil 4 dans lequel le fils de liage 2 est prévu d'une longueur supérieure à celle du fil de tension 1.
La figure 2 montre de manière schématique une illustration détaillée d'un tapis avec indication du fil de chaîne 1, 2 et du fil de trame 3 dans lequel le fils de liage 2 est prévu d'une longueur supérieure à celle du fil de tension 1.
La figure 3 montre un tapis selon le mode de réalisation de la figure 1, dans lequel un des fils de chaîne de poil 5 est prévu comme fil chenille (p.ex. une chenille en polyester ou une chenille en acrylique) et/ou comme un fil de fantaisie, comme par exemple un fil de laine teinté, un fil de coton, un fil de polyamide, un fil bouclé ou frisé, etc.

### DESCRIPTION DÉTAILLÉE DE L'INVENTION

Sauf définition différente, tous les termes qui sont utilisés dans la description de l'invention, y compris les termes techniques et scientifiques, possèdent la signification telle qu'elle est généralement comprise par l'homme de métier du domaine technique de l'invention. Pour une meilleure évaluation de l'invention, les termes suivants sont explicitement expliqués.

"un", "une", "le" et "la" font référence dans ce document tant au singulier qu'au pluriel à moins que le contexte ne laisse présumer clairement une autre interprétation. Par exemple, "un segment" signifie un ou plus d'un segment.

Lorsque "environ" ou "à peu près" est utilisé dans ce document pour une grandeur mesurable, un paramètre, une durée ou un moment, etc., on entend par là des variations égales ou inférieures à +/- 20%, de préférence égales ou inférieures à +/-10%, avec une plus grande préférence, égales ou inférieures à +/-5%, avec une plus grande préférence encore, égales ou inférieures à +/-1%, et même avec une plus grande préférence encore, égales ou inférieures à +/-0.1% de la valeur citée, dans la mesure où ces variations sont applicables à l'invention décrite. Il faut toutefois bien comprendre ici que la valeur de la grandeur pour laquelle le terme "environ" ou "à peu près" est utilisé sera spécifiquement mentionnée.

Les termes "comprennent", "comprenant", "se composent de", "se composant de", "doter de", "comportent", "comportant", "incluent", "incluant", "contiennent", "contenant" sont des synonymes et constituent des termes inclusifs ou ouverts, qui indiquent la présence de ce qui suit, et qui n'excluent pas ou n'empêchent pas la présence d'autres composants, caractéristiques, éléments, membres, étapes, connus par l'état de la technique ou décrits dans celui-ci.

La citation d'intervalles numériques par les valeurs extrêmes comprend tous les nombres entiers, les fractions et/ou les chiffres réels situés entre les valeurs extrêmes, ces valeurs extrêmes comprises.

Le terme « tapis » renvoie dans le contexte de la présente invention spécifiquement à un tapis tissé, dans lequel les fils de trame sont insérés et tissés avec une série de fils de chaîne. Le passage répétitif des fils de trame en-dessous et au-dessus des fils de chaîne forme un motif d'insertion. Le motif d'insertion peut être répété plusieurs fois au niveau de la rangée de trame. Ladite première série de fils de chaîne peut être égale à ou différente de ladite deuxième série de fils de chaîne. La première série de fils de chaîne peut comprendre 1, 2, 3, 4, 5, 6, 7, 8, 9 ou 10 fils. La deuxième série de fils de chaîne peut comprendre 1, 2, 3, 4, 5, 6, 7, 8, 9 ou 10 fils. Le nombre de fils de chaîne détermine la largeur, la longueur ou le diamètre du tapis. Les fils de trame sont insérés et tissés au-dessus des fils de chaîne dans des rangées de sorte qu'une rangée commence au niveau du premier fil de chaîne et s'étend jusqu'au dernier fil de chaîne. Les fils de chaîne et les fils de trame sont positionnés de telle façon qu'ils soient positionnés perpendiculairement l'un par rapport à l'autre. Les fils de chaîne et les fils de trame peuvent être sélectionnés dans le groupe comprenant, mais pas limité à: le lin, la laine, le coton, la soie. Les fils de trame et les fils de chaîne peuvent être de matière différente ou identique. De préférence, ledit tapis a une densité de surface située entre 500 gsm et 2500 gsm, de préférence entre 750 gsm et 2250 gsm, plus de préférence entre 1000 gsm et 2000 gsm et a le plus de préférence une densité de surface de 1000 gsm, 1050 gsm, 1100 gsm, 1150 gsm, 1200 gsm, 1250 gsm, 1300 gsm, 1350 gsm, 1400 gsm, 1450 gsm, 1500 gsm, 1550 gsm, 1600 gsm, 1650 gsm, 1700 gsm, 1750 gsm, 1800 gsm, 1850 gsm, 1900 gsm ou 1950 gsm, ou toute valeur entre ces valeurs.

Le terme « fil de tension » doit être compris comme un fil de chaîne et renvoie à un fil prévu dans la direction de chaîne du tapis. Le fil de tension est généralement défini par opposition à un fil de liage et se distingue de ce fil par une longueur plus courte par rapport au fil de liage. Le fil de tension peut être teinté afin de montrer une couleur ou un motif de couleurs à la surface du tapis.

Le terme « fil de liage » doit être compris comme un fil de chaîne et renvoie à un fil prévu dans la direction de chaîne du tapis. Le fils de liage est généralement défini par opposition à un fil de tension et se distingue de ce fil par une longueur plus longue par rapport au fil de tension. Par conséquent, le fil de liage est généralement bien visible à la surface. De préférence, le fil de liage n'est pas teinté parce que lesdits fils de liage ne sont pas ou peu visibles et ne contribuent dès lors pas ou peu au résultat visuel.

Le terme « fil de trame » doit être compris comme transversal au fils de chaîne et renvoie à un fil prévu dans la direction de trame du tapis. Le fil de trame est généralement tissé de manière simple ou multiple entre les fils de chaîne. Cela veut dire qu'un ou plusieurs (par exemple, deux, trois, quatre, cinq, six, sept, huit, etc.) fils de trame peuvent être insérés entre les chaînes en une trame. Une « trame » doit être comprise comme une simple étape d'opération dans lequel un ou plusieurs fils de trame sont passés entre la série de fils de chaîne transversaux. Après la « trame », les fils de chaîne sont menés dans une nouvelle position qui est généralement différente et une nouvelle trame est réalisée. Par conséquent, le fil de trame est généralement bien visible à la surface. De préférence, le fil de trame est teinté afin de montrer une couleur bien visible ou un motif de couleurs à la surface du tapis. Dans le contexte de la présente invention, la densité longitudinale du fil de trame doit être comprise comme la densité longitudinale de l'ensemble d'un ou plusieurs fils de trame qui sont tissés dans une seule trame.

Le terme « fil de poil » doit être compris comme un synonyme du terme « fil de chaîne de poil » et renvoie à un fil prévu dans la direction de chaîne du tapis. Le fil de poil a généralement un diamètre plus large que le fil de chaîne et est dès lors très approprié pour apparaître à la surface du tapis. Le fil de poil est dès lors de préférence teinté afin de montrer une couleur ou un motif de couleurs à la surface du tapis. Dans un mode de réalisation préféré, la présente invention offre un tapis selon le premier aspect, dans lequel ledit fil de chaîne de poil a un diamètre supérieur à celui du fil de chaîne, exprimé en 1000/tex (Nm) et/ou exprimé en dtex. De préférence, ledit fil de chaîne de poil a une épaisseur située entre 1.5 1000/tex (Nm) et 6 1000/tex (Nm) et entre 1600 dtex et 6600 dtex.

Le terme « motif spacedye » doit être compris comme un motif arbitraire de deux ou plusieurs couleurs apportées de manière alternative et dominante à un fil. La présente invention en plus réussit à simuler un motif spacedye en utilisant de différents fils de chaîne et/ou de trame apparaissant de manière arbitraire et alternative à la surface du tapis.

A cet effet, l'invention offre, dans un premier aspect, un tapis avec relief de surface tissé, comprenant au moins une série de chaînes de tension (1), une série de chaînes de liage (2), dans lequel lesdites chaînes (1, 2) sont tissées avec une série de fils de trame (3), dans lequel ledit tapis comprend une face d'aspect et une face de dos, et dans lequel une couche de dos est attachée à ladite face de dos; et dans lequel le rapport de la longueur de lesdites chaînes de liage (2) par rapport à la longueur desdites chaînes de tension (1) est supérieur à 1.50. Dans un mode de réalisation préféré, la présente invention offre un tapis selon le premier aspect de l'invention, dans lequel le rapport de la longueur desdites chaînes de tension (1) par rapport à la longueur desdites chaînes de liage (2) est supérieur à 1.60, supérieur à 1.70, supérieur à 1.80, supérieur à 1.90 et même supérieur à 2.0.

En choisissant un rapport de la longueur desdites chaînes de liage (2) par rapport à la longueur desdites chaînes de tension (1) qui est assez large, les fils de trames compris dans le tissu, sont poussés plus explicitement vers la surface du tapis. Ainsi, un microrelief est créé à la surface suite à un processus de tissage. En utilisant de différents fils de chaîne avec un aspect visuel différent (p.ex. couleur), un relief unique et une nuance de teintes sont observés, simulant un motif spacedye. En utilisant en plus un fil de chaîne et/ou de trame de type spacedye, un relief unique et une nuance de teintes sont observés. Ainsi, un produit unique peut être fabriqué pour un consommateur.

Cela est illustré de manière schématique à la Figure 1. La Figure 1 montre de manière schématique une illustration détaillée d'une section du tapis selon l'invention transversal à la direction de trame. La Figure 1 montre de manière schématique une illustration détaillée d'un tapis avec indication du fil de chaîne 1, 2, du fil de trame 3 et des fils de chaîne de poil 4 dans lequel le fil de liage 2 est prévu d'une longueur supérieure à celle du fil de tension 1. Ainsi, les fils de trame 3 sont poussés vers la surface, et un microrelief est créé. Grâce à ce microrelief, une surface plus rugueuse est obtenue.

La Figure 2 montre de manière schématique une illustration détaillée d'un tapis avec indication du fil de chaîne 1, 2 et du fil de trame 3 dans lequel le fils de liage 2 est prévu d'une longueur supérieure à celle du fil de tension 1. Un microrelief est obtenu grâce au tapis selon la Figure 2.

Dans un mode de réalisation préféré, la présente invention offre un tapis selon le premier aspect de l'invention, dans lequel ledit tapis comprend au moins un fil de trame, lequel fil de trame est un fil d'effet 31, tel que par exemple un fil chenille (p.ex. une chenille en polyester ou une chenille en acrylique) et/ou un fil de fantaisie, tel que par exemple un fil de laine teinté, un fil de coton, un fil de polyamide, un fil bouclé et/ou un fil frisé, etc. Le fil de trame 31 est prévu dans le tapis de telle façon que le fil de trame 31 (Figure 1) apparaît à la surface du tapis. Plus de préférence, la présente invention offre un tapis selon le premier aspect de l'invention, dans lequel ledit tapis comprend au moins un fil de trame, lequel fil de trame n'est pas un fil d'effet, tel que fil de trame 32, comme par exemple, mais pas limité à, un fil de coton ou de jute. Le fil de trame 32 est prévu dans le tapis de telle façon que le fil de trame 32 (Figure 1) n'apparaît pas à la surface du tapis.

Dans un mode de réalisation préféré, la présente invention offre un tapis selon le premier aspect de l'invention, dans lequel le rapport de la longueur de lesdites chaînes de tension (1) par rapport à la longueur de lesdites chaînes de liage (2) est supérieur à 2.00, supérieur à 2.25, supérieur à 2.50, supérieur à 2.75, supérieur à 3.00. Un rapport assez large garantit que les fils de trame sont poussés suffisamment à la surface du tapis.

Dans un mode de réalisation préféré, la présente invention offre un tapis selon le premier aspect de l'invention, dans lequel le rapport de la longueur desdites chaînes de tension (1) par rapport à la longueur desdites chaînes de liage (2) est inférieur à 5.0, de préférence inférieur à 4.75, inférieur à 4.50, inférieur à 4.25 et même inférieur à 3.75. En choisissant le rapport égal à ou inférieur à 5, lesdits fils de trame se situent plus proches l'un de l'autre à la surface.

Dans un mode de réalisation préféré, la présente invention offre un tapis selon le premier aspect de l'invention, dans lequel ladite série de fils de trame (3) ont une densité longitudinale supérieure à celle de ladite série de chaînes de liage (2). Grâce à une épaisseur assez large du fil de trame, un aspect plus rugueux de la surface du tapis est obtenu. Dans un mode de réalisation plus préféré, la présente invention offre un tapis selon le premier aspect de l'invention, dans lequel le rapport de la densité longitudinale desdits fils de trame (3) par rapport à la densité longitudinale desdites chaînes de liage (2) est supérieur à 1.5, de préférence supérieur à 2.0.

Dans un mode de réalisation préféré, la présente invention offre un tapis selon le premier aspect de l'invention, en plus comprenant une deuxième série de chaînes de tension. Une telle deuxième série de chaînes de tension peut être insérée pour encore affiner l'aspect visuel du tapis. Ladite deuxième série de chaînes de tension peut être insérée avec une longueur, dans lequel le rapport de la longueur de lesdites chaînes de liage (2) par rapport à la longueur de lesdites chaînes de tension (1) est également supérieur à 1.20, de préférence supérieur à 1.35 et plus de préférence supérieur à 1.50 et même supérieur à 1.60, supérieur à 1.70, supérieur à 1.80, supérieur à 1.90, et même supérieur à 2.0.

Dans un mode de réalisation préféré, la présente invention offre un tapis selon le premier aspect de l'invention, dans lequel ledit tapis comprend une face d'aspect et une face de dos, et dans lequel ladite face de dos est prévue d'une couche de dos d'un non-tissé, d'un tricotage ou d'un tissu. Ladite couche de dos est prévue pour offrir une meilleure stabilité dimensionnelle du tapis. Ladite couche de dos est de préférence un non-tissé d'un poids de surface spécifique supérieur à 100 gsm, supérieur à 150 gsm, supérieur à 175 gsm, supérieur à 200 gsm, supérieur à 225 gsm ou même supérieur à 250 gsm. Plus de préférence, ladite couche de dos est un non-tissé d'un poids de surface spécifique supérieur à 300 gsm, supérieur à 350 gsm, supérieur à 400 gsm, supérieur à 450 gsm, supérieur à 500 gsm, supérieur à 550 gsm, supérieur à 600 gsm ou même supérieur à 650 gsm. De préférence, ladite couche de dos est un non-tissé d'un poids de surface spécifique inférieur à 1500 gsm et de préférence inférieur à 1200 gsm et même inférieur à 800 gsm. Une telle couche de dos permet d'offrir un confort, stabilité et atténuation du bruit suffisants.

Dans un mode de réalisation préféré, la présente invention offre un tapis selon le premier aspect de l'invention, dans lequel ladite couche de dos (6), de préférence ledit non-tissé, est attachée au moyen d'une colle (7) et/ou d'un latex (7), dans lequel ladite colle est de préférence sélectionnée de p.ex. acétate de polyvinyle et éthylène-acétate de vinyle et dans lequel ledit latex est sélectionné de p.ex. latex styrène-butadiène carboxylé comprenant du carbonate de calcium. De préférence, ladite colle et/ou ledit latex a une densité de surface située entre 500 gsm et 2000 gsm, de préférence entre 750 gsm et 1750 gsm, plus de préférence entre 800 gsm et 1600 gsm et le plus de préférence une densité de surface de 800 gsm, 850 gsm, 900 gsm, 950 gsm, 1000 gsm, 1050 gsm, 1100 gsm, 1150 gsm, 1200 gsm, 1250 gsm, 1300 gsm, 1350 gsm, 1400 gsm, 1450 gsm, 1500 gsm, 1550 gsm ou 1600 gsm, ou toute valeur entre ces valeurs.

Dans un mode de réalisation plus préféré, la présente invention offre un tapis selon le premier aspect de l'invention, dans lequel ladite couche de dos est faite d'un non-tissé fabriqué du PET, du polyester ou du polypropylène.

Dans un mode de réalisation plus préféré, la présente invention offre un tapis selon le premier aspect de l'invention, dans lequel un ou plusieurs desdits fils de chaîne et/ou de trame sont prévus d'un motif spacedye.

Le motif spacedye est un motif arbitraire de deux ou plusieurs couleurs qui sont apportées de manière alternative et dominante sur un fil, dans le cas ci-dessus sur lesdits fils de chaîne et/ou de trame. Lesdits fils de chaîne et/ou de trame sont donc prévus d'une succession de sections de longueur arbitraire, dans lequel chaque section est caractérisée par une couleur dominante. Le fil de chaîne de poil 4 ,5 est alors considéré comme un type spécifique de fils de chaîne, vu que les fils de chaîne de poil 4, 5 sont prévus dans la direction de chaîne du tapis tissé.

L'illustration détaillée de la Figure 1 montre des fils de chaîne 1, 2, des fils de trame 3 et de fils de chaîne de poil 4, dans lequel lesdits fils de chaîne de poil 4 sont prévus d'un motif spacedye. Cela est illustré à la Figure 1 au moyen de différentes sections successives de deux fils de chaîne de poil 4 illustrés, dans lequel chaque section est indiqué par un type de hachure différent. Chaque type de hachure y correspond à une couleur particulière, ou encore mieux à une couleur dominante particulière. Cela veut dire que aussi en-dedans une section de couleur d'un motif spacedye, l'intensité d'une couleur peut varier. Aussi à la Figure 1, le motif alternatif de fil de chaîne de poil est illustré, lequel apparaît en haut de la surface du tapis. Ainsi, à gauche de la figure, le fil de chaîne de poil hachuré de manière rugueuse est visible à la surface, suivi d'une section dans laquelle le fil de chaîne de poil avec le fil de chaîne de poil hachuré de manière fine est visible en haut de la surface. Un autre aspect de l'invention, illustré à la figure, est la longueur différente du premier fil 1 et du deuxième fil 2 de chaîne. Le deuxième fil de chaîne est plus long que le premier fil de chaîne. Cela est le résultat de la tension différente des fils de chaîne respectives cependant étirer dans le plan de tissage. Le résultat est que les fils de trame 3, illustrés en haut dans la figure sur la largeur de la section, sont tirés dans le tapis. Ainsi, les fils de trame 3 aident aussi à faire apparaître les fils de chaîne de poil 4 à la surface du tapis. Un autre aspect qui est illustré par la Figure 1, est que les fils de chaîne de poil 4 sont plus larges que les fils de chaînes 1, 2. Aussi à cause de cela, les fils de chaîne de poil 4 sont mieux positionnés à la surface du tapis tissé. Par conséquent, la nuance de teintes est mieux visible, vue que la nuance des teintes est mieux visible sur un fil relativement large qu'une même nuance de teintes sur un fil relativement fin.

Parce que les fils de chaîne avec la nuance de teintes sont au moins partiellement visibles à la surface du tapis, une nuance de teintes unique est observée. Ainsi, un produit unique peut être fabriqué pour un consommateur. En même temps, une grande diversité dans une catégorie de produits prédéfinie est obtenue sans cependant élargir l'espace de stockage nécessaire. En plus, l'invention est avantageuse quant à l'utilisation de colorants. Les colorants sont des composants relativement chers et leur utilisation dans des tapis doit dès lors être limitée. En apportant le motif spacedye dans des sections séparées d'une seule couche de peinture sur le fil, contrairement à plusieurs couches de peintures dans des sections définies, la consommation totale de colorants peut être limitée.

Dans un mode de réalisation préféré, la présente invention offre un tapis selon le premier aspect de l'invention, dans lequel un ou plusieurs fils de chaîne de poil sont prévus d'un motif spacedye. La nuance de teintes est en particulier claire dans le tapit obtenu lorsque le motif spacedye est intégré dans les fils de chaîne de poil. Les fils de chaîne de poil ont d'habitude une section plus épaisse que d'autres fils de chaîne et sont intégrés dans le tapis avec une tension de chaîne plus basse, de sorte que la longueur des fils de chaîne de poil dans le tapis est supérieure à la longueur du fil de chaîne situé à côté.

Dans un mode de réalisation préféré, la présente invention offre un tapis selon le premier aspect de l'invention, dans lequel l'épaisseur d'au moins un fil de chaîne de poil est supérieure d'au moins 1,15 fois et de préférence d'au moins 1,30 fois que l'épaisseur d'au moins un fil de chaîne.

L'épaisseur du fil de chaîne de poil peut être exprimée à l'aide de la valeur dtex, néanmoins de préférence à l'aide du diamètre de la section transversale du fil en repos. Des fils de chaîne de poil peuvent être sélectionnés dans le groupe comprenant: des fils chenille tels que par exemple chenille de coton 2,2 1000/tex (Nm); du fil de laine tel que par exemple la laine 6/2 1000/tex (Nm). De tels fils ont l'avantage qu'ils sont volumineux et bien appropriés pour maintenir les caractéristiques de couleur après la peinture.

Dans un mode de réalisation préféré, la présente invention offre un tapis selon le premier aspect de l'invention, comprenant une pluralité de fils de chaînes de poil, dans lequel au moins un fil de chaîne de poil est fait de laine et au moins un fil de chaîne de poil est fait de chenille.

Un fil chenille doit être compris comme un fil comprenant un fil central, dans le jargon aussi appelé « l'âme » du fil, lequel fil central comprend de préférence 2, 3 ou 4 fils. Autour du fil central, une pluralité de particules latéraux sont prévus, qui contribuent au grand volume du fil chenille lors d'une densité basse. À cause de ce grand volume lors d'une densité basse du fil chenille, le fil chenille se situe automatiquement à la surface du tapis lors du tissage. Par conséquent, les motifs de couleur dans le fil chenille deviennent bien visibles à la surface. Parce qu'un fil chenille a une densité relativement basse, le poids total du tapis est limité, ce qui est avantageux pendant le transport et l'installation.

Un tel mode de réalisation est illustré schématiquement sur la Figure 3. La Figure 3 montre de manière schématique une illustration détaillée d'un tapis selon le mode de réalisation de la Figure 1, dans lequel un des fils de chaîne de poil est prévu comme un fil chenille, 5 (p.ex. une chenille en polyester ou une chenille en acrylique) et/ou comme un fil de fantaisie, comme par exemple un fil de laine teinté, un fil de coton, un fil de polyamide, un fil bouclé ou frisé, etc. Ceci est illustré au moyen de la zone hachuré transversale sur tout le fil. L'épaisseur variée de la zone hachurée transversale indique une couleur variée, ou mieux une couleur dominante variée dans une section particulière du fil chenille, 5.

Dans un mode de réalisation préféré, la présente invention offre un tapis selon le premier aspect de l'invention, dans lequel le rapport du nombre de fils de chaîne de poil en laine par rapport au nombre de fils de chaîne de poil en chenille est égal à 3:1.

Ceci a l'avantage qu'il est obtenu un optimum de caractéristiques de produit. La laine a une bonne résistance à l'usure et durabilité ainsi qu'une relativement bonne élasticité naturelle et une bonne capacité d'absorption pour des colorants. En même temps, la laine forme un bon bulk ou volume, lequel volume permet aux fils de chaîne de poil en laine de venir à la surface, tel qu'a été décrit ci-dessus. Le fil chenille est, plus que le fil de laine, approprié pour offrir un volume relativement large et par conséquent aussi pour reproduire les couleurs. Bien que tout autre rapport soit également possible, les inventeurs ont trouvé un rapport optimal de fils de chaîne de poil en laine par rapport aux fils de chaîne de poil chenille entre 10:1 et 1:2 et plus de préférence entre 5:1 et 1:1 et encore plus de préférence de 4:1, 3:1 ou 2:1, ou tout autre rapport entre ces valeurs.

Dans un mode de réalisation préféré, la présente invention offre un tapis selon le premier aspect de l'invention, dans lequel au moins un fil de chaîne de poil en laine et au moins un fil de chaîne de poil chenille apparaissent de manière alternative à la surface.

Ceci a l'avantage qu'une plus grande variation en nuances de couleurs peut être prévue dans le tapis. Cette alternance dans la flottation de fils de chaîne de poil en laine et de fils de chaîne de poil chenille peut être apportée par la prévision d'un fil de chaîne de poil en laine et chenille entre deux dents successives d'un peigne de tissage.

Dans un mode de réalisation préféré, la présente invention offre un tapis selon le premier aspect de l'invention, dans lequel ladite première série de fils de chaîne et ladite deuxième série de fils de chaine ont une longueur différente.

Ceci peut être obtenu par la tension de ladite première et ladite deuxième série de fils de chaîne dans le plan de tissage avec une tension différente. Par conséquent, une première série de fils de chaine sera comprise dans le tapis de manière relativement rectiligne, tel que par exemple le fil de chaîne 1 dans la Figure 1 et 2. Une deuxième série de fils de chaîne, laquelle est prévue dans le tapis tissé avec une plus grande longueur et une tension plus basse, sera poussée plus loin du centre du tapis par le fil de trame, tel que par exemple le fil de chaîne sur la Figure 1 et 2. Le résultat est que le fil de chaîne plus long, ex. 2, mène les fils de trame, ex. 3, à certains endroits vers le centre du tapis. Les fils de trame, ex. 3, poussent à leur tour les fils de chaîne de poil, ex. 4, 5 vers le centre du tapis. Par conséquent, les coupes intermédiaires du fil de chaîne de poil, ex. 4, 5 sont poussées vers l'extérieur.

Dans un mode de réalisation préféré, la présente invention offre un tapis selon le premier aspect de l'invention, dans lequel au moins un fil de chaîne de poil est plus long d'au moins un fil de chaîne.

Ceci peut être atteint grâce au tissage du fil de chaîne de poil avec une tension plus basse ou même sans tension dans le tapis. Le résultat est que le fil de chaîne assure que les fils de trame sont poussés vers le centre du tapis, de sorte que les fils de chaîne de poil sont menés par les fils de trame à certains endroits vers le centre du tapis, pour ainsi pousser les sections intermédiaires du fil de chaîne de poil vers l'extérieur. Ainsi, la nuance de teintes dans le fil de chaîne de poil est rendue visible de manière optimale à la surface du tapis.

Dans un mode de réalisation préféré, la présente invention offre un tapis selon le premier aspect de l'invention, comprenant deux ou plusieurs fils de chaîne de poil qui sont différents. En choisissant pour des fils de chaîne de poil différents les uns des autres, les caractéristiques du tapis peuvent encore mieux être optimalisées, tant par rapport à la variation dans la nuance de teintes que par rapport aux caractéristiques telles que la densité, la résistance à l'usure, etc.

Dans un deuxième aspect, l'invention offre une méthode pour la fabrication d'un tapis avec un relief de surface tissé, plus particulièrement un tapis selon le premier aspect de l'invention, comprenant les étapes suivantes:
- prévoir au moins une série de chaînes de tension (1), une série de chaînes de liage (2) dans la direction de chaîne d'un plan de tissage;
- entrelacer une série de fils de trame (3) avec lesdites chaînes (1, 2), ainsi obtenant un tapis avec une face d'aspect et une face de dos;
- attacher une couche de dos à ladite face de dos;
dans lequel la pré-tension desdites chaînes de tension (1) et de liage (2) est réglée de telle façon que le rapport de la longueur desdites chaînes de liage (2) par rapport à la longueur desdites chaînes de tension (1) dans le tapis fabriqué est supérieur à 1.20, de préférence supérieur à 1.35, et plus de préférence supérieur à 1.50. Dans un mode de réalisation préféré, la présente invention offre une méthode selon le deuxième aspect de l'invention, dans lequel la pré-tension desdites chaînes de tension (1) et de liage (2) est réglée de telle façon que le rapport de la longueur desdites chaînes de tension (1) par rapport à la longueur desdites chaînes de liage (2) est supérieur à 1.60, supérieur à 1.70, supérieur à 1.80, supérieur à 1.90 et même supérieur à 2.00.

La méthode selon le deuxième aspect de l'invention est prévue pour la fabrication d'un tapis selon le premier aspect de l'invention, et les caractéristiques du tapis selon le premier aspect de l'invention s'appliquent donc aussi à la méthode selon le deuxième aspect de l'invention.

Dans un mode de réalisation préféré, la présente invention offre une méthode selon le deuxième aspect de l'invention, dans lequel ladite série de fils de trame (3) est prévue d'une densité longitudinale supérieure à celle de ladite série de chaînes de liage (2).

Dans un mode de réalisation préféré, la présente invention offre une méthode selon le deuxième aspect de l'invention, dans lequel le rapport de la densité longitudinale desdits fils de trame (3) par rapport à la densité longitudinale desdites chaînes de liage (2) est supérieur à 1.5, de préférence supérieur à 2.0.

Dans un mode de réalisation préféré, la présente invention offre une méthode selon le deuxième aspect de l'invention, en plus comprenant l'étape de prévoir une deuxième série de chaînes de tension.

Dans un mode de réalisation préféré, la présente invention offre une méthode selon le deuxième aspect de l'invention, en plus comprenant l'étape de l'application d'une couche de dos constituée d'une couche de mousse synthétique, d'un non-tissé, d'un tricotage ou un tissu sur une face de dos dudit tapis. Dans un mode de réalisation plus préféré, la présente invention offre une méthode selon le deuxième aspect de l'invention, dans lequel ladite couche de dos est faite d'un non-tissé fabriqué du PET, du polyester ou du polypropylène.

Dans un mode de réalisation préféré, la présente invention offre une méthode selon le deuxième aspect de l'invention, dans lequel un ou plusieurs desdits fils de chaîne sont colorés d'avance selon un motif spacedye. En appliquant ledit motif spacedye sur lesdits fils de chaîne, une nuance de teintes devient visible à la surface du tapis. Le motif spacedye prévu sur le fil de chaîne offre une alternance arbitraire de couleurs à la surface visible du tapis et résulte donc dans un tapis unique. Par conséquent, une grande diversité dans une certaine catégorie de produits est obtenue sans cependant élargir l'espace de stockage nécessaire.

Dans un mode de réalisation préféré, la présente invention offre une méthode selon le deuxième aspect de l'invention, dans lequel lesdits fils de chaîne et/ou lesdits fils de chaîne de poil sont arrangés dans un peigne de chaîne avec une série de dents et dans lequel au moins deux fils de chaîne et/ou fils de chaîne de poil sont arrangés entre deux dents de ladite peigne de chaîne.

En insérant au moins un fil de chaîne et/ou fil de chaîne de poil entre deux dents successives d'un peigne de tissage dans un plan de tissage, les au moins deux fils de chaîne et/ou de chaîne de poil peuvent apparaître de manière alternative et arbitraire à la surface du tapis pendant le tissage. Ceci a l'avantage qu'une plus grande variation dans la nuance de teintes peut être prévue dans le tapis, ainsi qu'une plus grande variation dans la texture de la surface du tapis. Ainsi, des fils de chaîne et/ou de chaîne de poil avec une densité, rugosité, brillance, etc. différente peuvent être prévus et peuvent ainsi mener à une variation dans l'observation de l'utilisateur.

Dans un mode de réalisation préféré, la présente invention offre une méthode selon le deuxième aspect de l'invention, dans lequel un ou plusieurs desdits fils de chaîne sont colorés d'avance dans un motif spacedye au moyen de l'arrosage du colorant vaporisé à différents endroits desdits fils de chaine.

La vaporisation d'un colorant sur les fils de chaine a l'avantage que le processus de séchage est relativement limité pour les fils colorés comparé à d'autres techniques de colorisation. Ainsi, de différentes sections desdits fils de chaîne peuvent être prévues d'une couleur ou mieux encore d'une couleur dominante. Les sections juxtaposées peuvent être prévues d'une autre couleur ou peuvent être prévues sans couleur. Les sections peuvent également être colorées en différentes longueurs. Selon l'état de la technique, un motif spacedye est appliqué par l'application d'abord d'une première couche de peinture sur tout le fil; ensuite une deuxième couche de peinture à certaines sections; et finalement une troisième couche de peinture à certaines parties de la deuxième couche de peinture. Ainsi, certaines sections sont prévues de deux ou plusieurs peintures. Selon l'invention, des sections prévues sont fournit d'une première peinture; d'autres sections d'une deuxième peinture; etc. De cette manière, le fil est prévu d'essentiellement seulement une couche de peinture, ce qui implique une importante limitation de colorants et donc entraîne une réduction de coûts significative.

Dans un mode de réalisation préféré, la présente invention offre une méthode selon le deuxième aspect de l'invention, dans lequel ladite première et deuxième série de fils de chaîne sont prévus d'une tension différente dans ledit plan de tissage.

Grâce à la prévision de ladite première et deuxième série de fils de chaîne d'une tension différente, une première série de fils de chaîne avec une tension supérieure comparé à ladite deuxième série de fils de chaîne, sont compris relativement rectiligne dans le tapis, tel que par exemple le fil de chaîne 1 sur la Figure 1 et 2. Une deuxième série de fils de chaîne, laquelle est insérée dans le tapis tissé avec une plus grande longueur et une tension plus basse, sera poussée par le fil de trame plus loin du centre du tapis, tel que par exemple le fil de chaîne 2 sur la Figure 1 et 2. Le résultat est que le fil de chaîne plus longue mène les fils de trame à certains endroits vers le centre du tapis. Les fils de trame poussent à leur tour les fils de chaîne de poil vers le centre du tapis. Ainsi, les coupes intermédiaires du fil de chaîne de poil sont poussées vers l'extérieur, ce qui offre une meilleure visibilité du motif spacedye sur lesdits fils de chaîne de poil à la surface du tapis.

### EXEMPLE 1

Un tissu est formé au moyen d'une chaîne de liage, une chaîne de tension et un fil de trame. La chaîne de liage est faite d'un 12/3Ne Co/PES 50/50 à une densité de 7.4 fils par cm. La chaîne de tension est faite d'un 10/4Ne Co/PES 50/50 à une densité de 3.7 fils par cm. La chaîne de trame est faite de la laine 2.2/3 1000/tex (Nm) à une densité de 5.5 pousses par cm. Le tissu est prévu d'un poids de surface de 1600 gsm.

Le tissu est ensuite prévu d'une couche préliminaire en latex à base d'acétate de polyvinyle et d'éthylène-acétate de vinyle avec une teneur en matière sèche de 45-51% en poids et un pH entre 4 et 7. La colle pour la lamination de la couche de dos est une dispersion aqueuse à base de latex styrène-butadiène carboxylé avec matière de charge de carbonate calcium avec une teneur en matière sèche d'environ 75-80% en poids. La couche de dos est faite de 100% PET non-tissé et est prévue d'une densité de surface de 675 gsm avec une épaisseur de 4 mm. Le poids de surface de ladite colle avec latex est de 915 gsm.

### EXEMPLE 2

Un tissu est formé au moyen d'une chaîne de liage, une chaîne de tension, un fil de chaîne de poil et un fil de trame. La chaîne de liage est faite d'un 12/3Ne Co/PES 50/50 à une densité de 7.4 fils par cm. La chaîne de tension est faite d'un 10/4Ne Co/PES 50/50 à une densité de 3.7 fils par cm. Le fil de chaîne de poil est faite d'un 6/2 1000/tex (Nm) laine. La chaîne de trame est faite de chenille en polyamide 2.2 1000/tex (Nm) à une densité de 5.5 pousses par cm. Le tissu est prévu d'un poids de surface de 1070 gsm.

Le tissu est ensuite prévu d'une couche préliminaire en latex à base d'acétate de polyvinyle et d'éthylène-acétate de vinyle avec une teneur en matière sèche de 45-51% en poids et un pH entre 4 et 7. La colle pour la lamination de la couche de dos est une dispersion aqueuse à base de latex styrène-butadiène carboxylé avec matière de charge de carbonate calcium avec une teneur en matière sèche d'environ 75-80% en poids. La couche de dos est faite de 100% PET non-tissé et est prévue d'une densité de surface de 675 gsm avec une épaisseur de 4 mm. Le poids de surface de ladite colle avec latex est de 1215 gsm.

## Revendications

1. Tapis avec un relief de surface tissé, comprenant au moins une série de chaînes de tension (1), une série de chaînes de liage (2), dans lequel lesdites chaînes (1, 2) sont tissées avec une série de fils de trame (3), dans lequel ledit tapis comprend une face d'aspect et une face de dos, et dans lequel une couche de dos (6) est attachée à ladite face de dos, **caractérisé en ce que** le rapport de la longueur desdites chaînes de liage (2) par rapport à la longueur desdites chaînes de tension (1) est supérieur à 1.50.

2. Tapis selon la revendication 1, en outre comprenant une deuxième série de chaînes de tension et/ou de fils de chaîne de poil.

3. Tapis selon la revendication 1 ou 2, dans lequel ledit tapis comprend au moins un fil de trame (31), lequel fil de trame est un fil d'effet (31), sélectionné dans le groupe comprenant un fil chenille en polyester, un fil chenille en acrylique et/ou un fil de fantaisie, sélectionné dans le groupe comprenant un fil de laine, un fil de coton, un fil de polyamide, un fil bouclé et/ou un fil frisé.

4. Tapis selon au moins une des revendications 1 à 3, dans lequel ledit tapis contient au moins un fil de trame (32), lequel fil de trame n'est pas un fil d'effet, sélectionné dans le groupe comprenant un fil de coton et un fil de jute.

5. Tapis selon au moins une des revendications 1 à 4, dans lequel le rapport de la longueur desdites chaînes de tension (1) par rapport à la longueur desdites chaînes de liage (2) est supérieur à 1.60 et de préférence supérieur à 1.70.

6. Tapis selon au moins une des revendications 1 à 5, dans lequel le rapport de la longueur desdites chaînes de tension (1) par rapport à la longueur desdites chaînes de liage (2) est inférieur à 5.0 et de préférence inférieur à 4.0.

7. Tapis selon au moins une des revendications 1 à 6, dans lequel ladite série de fils de trame (3) a une densité longitudinale supérieure à celle de ladite série de chaînes de liage (2).

8. Tapis selon la revendication 7, dans lequel le rapport de la densité longitudinale desdits fils de trame (3) par rapport à la densité longitudinale desdites chaînes de liage (2) est supérieur à 1.5, de préférence supérieur à 2.0.

9. Tapis selon au moins une des revendications 1 à 8, dans lequel ladite couche de dos (6) est faite d'un non-tissé, d'un tricotage ou d'un tissu.

10. Tapis selon la revendication 9, dans lequel ladite couche de dos (6) est faite d'un non-tissé fait de PET, du polyester ou du polypropylène.

11. Tapis selon au moins une des revendications 1 à 10, comprenant des fils de chaîne de poil (4, 5), dans lequel un ou plusieurs fils de chaîne de poil (4, 5) sont prévus d'un motif spacedye.

12. Tapis selon au moins une des revendications 1 à 11, comprenant des fils de chaîne de poil (4, 5), dans lequel l'épaisseur d'au moins un fil de chaine de poil (4, 5) est supérieure d'au moins 1.15 fois et de préférence d'au moins 1.30 fois que l'épaisseur d'au moins un fil de chaîne (1, 2).

13. Tapis selon au moins une des revendications 1 à 12, comprenant des fils de chaîne de poil (4, 5), dans lequel au moins un fil de chaîne de poil (4, 5) est fait de laine et au moins un fil de chaîne de poil (4, 5) est fait de chenille.

14. Tapis selon la revendication 13, dans lequel le rapport du nombre de fils de chaîne de poil (4, 5) en laine par rapport au nombre de fils de chaîne de poil (4, 5) en chenille se situe entre 5:1 et 1:1.

15. Tapis selon la revendication 13 ou 14, dans lequel au moins un fil de chaîne de poil en laine (4, 5) et au moins un fil de chaîne de poil en chenille (5) apparaissent de manière alternative à la surface.

16. Tapis selon au moins une des revendications 1 à 15, comprenant deux ou plusieurs fils de chaîne de poil (4, 5) qui sont différents les uns des autres.

17. Méthode pour la fabrication d'un tapis avec un relief de surface tissé, comprenant les étapes de:
- prévoir au moins une série de chaînes de tension (1), une série de chaînes de liage (2) dans la direction de chaîne d'un plan de tissage;
- entrelacer une série de fils de trame (3) avec lesdites chaînes (1, 2), ainsi obtenant un tapis avec une face d'aspect et une face de dos;
- attacher une couche de dos (6) à la face de dos;
**caractérisé en ce que** la pré-tension desdites chaînes de tension (1) et de liage (2) est réglée de telle façon que le rapport de la longueur desdites chaînes de liage (2) par rapport à la longueur desdites chaînes de tension (1) dans le tapis fabriqué est supérieur à 1.50, de préférence supérieur à 1.60.

18. Méthode selon la revendication 17, dans lequel le rapport de la densité longitudinale desdits fils de trame (3) par rapport à la densité longitudinale desdites chaînes de liage (2) est supérieur à 1.5, de préférence supérieur à 2.0.

19. Méthode selon la revendication 17 ou 18, en outre comprenant l'étape de l'application d'une couche de dos (6) constituée d'une mousse synthétique, un non-tissé, un tricotage ou un tissu sur une face de dos dudit tapis.

20. Méthode selon au moins une des revendications 17 à 19, dans lequel lesdits fils de chaîne (1, 2) et/ou fils de chaîne de poil (4, 5) sont arrangés dans un peigne de tissage avec une série de dents et dans lequel au moins deux fils de chaîne (1, 2) et/ou fils de chaîne de poil (4, 5) sont arrangés entre deux dents de ladite peigne de tissage.

21. Méthode selon la revendication 20, dans lequel un ou plusieurs fils de chaîne (1, 2) et/ou fils de chaîne de poil (4, 5) sont colorés d'avance dans un motif spacedye.

## Patentansprüche

1. Teppich mit einem gewebten Oberflächenrelief, umfassend mindestens eine Reihe von Spannketten (1), eine Reihe von Bindeketten (2), wobei die Ketten (1, 2) mit einer Reihe von Schußfäden (3) gewebt sind, wobei der Teppich eine Vorderseite und eine Rückseite umfaßt, und wobei eine Rücken-schicht (6) an der Rückseite angebracht ist, **dadurch gekennzeichnet, daß** das Verhältnis der Länge der Bindeketten (2) zur Länge der Spannketten (1) größer als 1.50 ist.

2. Teppich nach Anspruch 1, ferner umfassend eine zweite Reihe von Spannketten und/oder Polkettfäden.

3. Teppich nach Anspruch 1 oder 2, wobei der Teppich mindestens ein Schussgarn (31) umfasst, wobei das Schussgarn ein Effektgarn (31) ist, das aus der Gruppe ausgewählt ist, die ein Polyester-Chenillegarn, ein Acryl-Chenillegarn und/oder ein Effektgarn umfasst, das aus der Gruppe ausgewählt ist, die ein Wollgarn, ein Baumwollgarn, ein Polyamidgarn, ein Schlingengarn und/oder ein gekräuseltes Garn umfasst.

4. Teppich nach mindestens einem der Ansprüche 1 bis 3, wobei der Teppich mindestens ein Schussgarn (32) enthält, welches Schussgarn kein Effektgarn ist, ausgewählt aus der Gruppe, die ein Baumwollgarn und ein Jutegarn umfasst.

5. Teppich nach mindestens einem der Ansprüche 1 bis 4, wobei das Verhältnis der Länge der Spannketten (1) zu der Länge der Bindeketten (2) größer als 1.60 und vorzugsweise größer als 1.70 ist.

6. Teppich nach mindestens einem der Ansprüche 1 bis 5, wobei das Verhältnis der Länge der Spannketten (1) zu der Länge der Bindeketten (2) weniger als 5.0 und vorzugsweise weniger als 4.0 beträgt.

7. Teppich nach mindestens einem der Ansprüche 1 bis 6, wobei die Reihe der Schußfäden (3) eine höhere Längsdichte aufweist als die Reihe der Bindeketten (2).

8. Teppich nach Anspruch 7, wobei das Verhältnis der Längsdichte der Schußfäden (3) zu der Längsdichte der Bindeketten (2) größer als 1.5, vorzugsweise größer als 2.0 ist.

9. Teppich nach mindestens einem der Ansprüche 1 bis 8, wobei die Rückenschicht (6) aus einem Vlies, einem Gewirke oder einem Gewebe hergestellt ist.

10. Teppich nach Anspruch 9, wobei die Rückenschicht (6) aus einem Vliesstoff aus PET, Polyester oder Polypropylen hergestellt ist.

11. Teppich nach mindestens einem der Ansprüche 1 bis 10, umfassend Polkettfäden (4, 5), wobei ein oder mehrere Polkettfäden (4, 5) in einem Spacedye vorgesehen sind.

12. Teppich nach mindestens einem der Ansprüche 1 bis 11, umfassend Polkettfäden (4, 5), wobei die Dicke mindestens eines Polkettfadens (4, 5) mindestens 1.15 mal und vorzugsweise mindestens 1.30 mal größer ist als die Dicke mindestens eines Kettfadens (1, 2).

13. Teppich nach mindestens einem der Ansprüche 1 bis 12, umfassend Polkettfäden (4, 5), wobei mindestens ein Polkettfaden (4, 5) aus Wolle und mindestens ein Polkettfaden (4, 5) aus Chenille hergestellt ist.

14. Teppich nach Anspruch 13, wobei das Verhältnis der Anzahl der Polkettfäden (4, 5) aus Wolle zu der Anzahl der Polkettfäden (4, 5) aus Chenille zwischen 5:1 und 1:1 liegt.

15. Teppich nach Anspruch 13 oder 14, bei dem mindestens ein Polkettfäden (4, 5) aus Wolle und mindestens ein Polkettfäden (5) aus Chenille abwechselnd auf der Oberfläche erscheinen.

16. Teppich nach mindestens einem der Ansprüche 1 bis 15, umfassend zwei oder mehr Polkettfäden (4, 5), die voneinander verschieden sind.

17. Verfahren zur Herstellung eines Teppichs mit einem gewebten Oberflächenrelief, umfassend die folgenden Schritte:
- mindestens eine Reihe von Spannketten (1), eine Reihe von Bindeketten (2) in der Kettrichtung einer Webebene vorsehen;
- Verweben einer Reihe von Schußfäden (3) mit den Ketten (1, 2), wodurch ein Teppich mit einer Vorderseite und einer Rückseite erhalten wird;
- Bringen Sie eine Rückschicht (6) an der Rückseite an;
**dadurch gekennzeichnet, dass** die Vorspannung der Spann- (1) und Bindeketten (2) so eingestellt ist, dass das Verhältnis der Länge der Bindeketten (2) zur Länge der Spannketten (1) im hergestellten Teppich größer als 1.50, vorzugsweise größer als 1.60 ist.

18. Verfahren nach Anspruch 17, wobei das Verhältnis der Längsdichte der Schußfäden (3) zu der Längsdichte der Bindeketten (2) größer als 1.5, vorzugsweise größer als 2.0 ist.

19. Verfahren nach Anspruch 17 oder 18, das ferner den Schritt des Aufbringens einer Rückenschicht (6), die aus einem synthetischen Schaum, einem Vlies, einem gewirkten oder gewebten Stoff besteht, auf eine Rückseite des Teppichs umfasst.

20. Verfahren nach mindestens einem der Ansprüche 17 bis 19, wobei die Kettfäden (1, 2) und/oder Polkettfäden (4, 5) in einem Webblatt mit einer Reihe von Zähnen angeordnet sind und wobei mindestens zwei Kettfäden (1, 2) und/oder Polkett-fäden (4, 5) zwischen zwei Zähnen des Webblattes angeordnet sind.

21. Verfahren nach Anspruch 20, bei dem ein oder mehrere Kettfäden (1, 2) und/oder Polkettfäden (4, 5) in einem Spacedye vorgefärbt werden.

## Claims

1. Carpet with a woven surface relief, comprising at least one series of tension warps (1), a series of binding warps (2), wherein said warps (1, 2) are woven with a series of weft threads (3), wherein said carpet comprises an aspect side and a back side, and wherein a back layer (6) is attached to said back side, **characterised in that** the ratio of the length of said binding warps (2) to the length of said tension warps (1) is greater than 1.50.

2. Carpet according to claim 1, further comprising a second set of tension warps and/or pile warp threads.

3. Carpet according to claim 1 or 2, wherein said carpet comprises at least one weft thread (31), which weft thread is an effect thread (31), selected from the group comprising a polyester chenille thread, an acrylic chenille thread and/or a fancy thread, selected from the group comprising a wool thread, a cotton thread, a polyamide thread, a bouclé thread and/or a crimped thread.

4. Carpet according to at least one of claims 1 to 3, wherein said carpet contains at least one weft thread (32), which weft thread is not an effect thread, selected from the group comprising a cotton thread and a jute thread.

5. Carpet according to at least one of claims 1 to 4, wherein the ratio of the length of said tension warps (1) to the length of said binding warps (2) is greater than 1.60 and preferably greater than 1.70.

6. Carpet according to at least one of claims 1 to 5, wherein the ratio of the length of said tension warps (1) to the length of said binding warps (2) is less than 5.0 and preferably less than 4.0.

7. Carpet according to at least one of claims 1 to 6, wherein said series of weft threads (3) has a higher longitudinal density than said series of binding warps (2).

8. Carpet according to claim 7, wherein the ratio of the longitudinal density of said weft threads (3) to the longitudinal density of said binding warps (2) is greater than 1.5, preferably greater than 2.0.

9. Carpet according to at least one of Claims 1 to 8, wherein said back layer (6) is made of a non-woven, knitted or woven fabric.

10. Carpet according to claim 9, wherein said back layer (6) is made of a nonwoven made of PET, polyester or polypropylene.

11. Carpet according to at least one of claims 1 to 10, comprising pile warp threads (4, 5), wherein one or more pile warp threads (4, 5) are provided in a spacedye pattern.

12. Carpet according to at least one of claims 1 to 11, comprising pile warp threads (4, 5), wherein the thickness of at least one pile warp thread (4, 5) is at least 1.15 times and preferably at least 1.30 times greater than the thickness of at least one warp thread (1, 2).

13. Carpet according to at least one of claims 1 to 12, comprising pile warp threads (4, 5), wherein at least one pile warp thread (4, 5) is made of wool and at least one pile warp thread (4, 5) is made of chenille.

14. Carpet according to claim 13, wherein the ratio of the number of pile warp threads (4, 5) in wool to the number of pile warp threads (4, 5) in chenille is between 5:1 and 1 : 1 .

15. Carpet according to claim 13 or 14, in which at least one wool pile warp thread (4, 5) and at least one chenille pile warp thread (5) appear alternately on the surface.

16. Carpet according to at least one of claims 1 to 15, comprising two or more pile warp threads (4, 5) which are different from each other.

17. Method for the manufacture of a carpet with a woven surface relief, comprising the steps of:
- providing at least one series of tension warps (1), one series of binding warps (2) in the warp direction of a weaving plane;
- interlacing a series of weft threads (3) with said warps (1, 2), thus obtaining a carpet with an aspect side and a back side;
- attaching a back layer (6) to the back side;
**characterised in that** the pre-tension of said tension (1) and binding warps (2) is adjusted in such a way that the ratio of the length of said binding warps (2) to the length of said tension warps (1) in the manufactured carpet is greater than 1.50, preferably greater than 1.60.

18. Method according to claim 17, wherein the ratio of the longitudinal density of said weft threads (3) to the longitudinal density of said binding warps (2) is greater than 1.5, preferably greater than 2.0.

19. Method according to claim 17 or 18, further comprising the step of applying a back layer (6) consisting of a synthetic foam, nonwoven, knitted or woven fabric to a back side of said carpet.

20. Method according to at least one of claims 17 to 19, wherein said warp threads (1, 2) and/or pile warp threads (4, 5) are arranged in a weaving reed with a series of teeth and wherein at least two warp threads (1, 2) and/or pile warp threads (4, 5) are arranged between two teeth of said weaving reed.

21. Method according to claim 20, wherein one or more warp threads (1, 2) and/or pile warp threads (4, 5) are pre-dyed in a spacedye pattern.
